# EUROPÄISCHE PATENTSCHRIFT

(11) **EP 0 711 700 B1**
(45) Veröffentlichungstag und Bekanntmachung des Hinweises auf die Patenterteilung: **11.03.1998**
(21) Anmeldenummer: 95114927.7
(22) Anmeldetag: 18.10.1995
(51) Int. Cl.: B62D 35/00, B60K 13/02

(54) **Luftleiteinrichtung mit Einströmöffnungen für Motorluft**
Spoiler with engine air intakes
Déflecteur comportant des prises d'air moteur

(30) Priorität: 11.11.1994 DE 4441592
(43) Veröffentlichungstag der Anmeldung: 15.05.1996
(73) Patentinhaber: Dr.Ing.h.c. F. Porsche Aktiengesellschaft, 70435 Stuttgart (DE)
(72) Erfinder: Ampferer, Herbert, D-74343 Sachsenheim (DE); Singer, Norbert, D-71665 Vaihingen (DE); Preiss, Michael, D-71665 Vaihingen (DE); Murkett, Stephen, D-70839 Gerlingen (DE)

(56) Entgegenhaltungen:
- EP-A- 0 199 010
- DE-A- 3 538 253
- DE-U- 8 801 032
- BARTH ET AL. 'La réussite Porsche' 1981 , E.P.A. , PARIS Kapitel "Type Carrera RSR-Turbo" * Seite 551; Abbildungen * Kapitel "935-1976" * Seite 562; Abbildungen *
- PATENT ABSTRACTS OF JAPAN vol. 16 no. 293 (M-1273) ,29.Juni 1992 & JP-A-04 078777 (NISSAN) 12.März 1992,

## Beschreibung

Die Erfindung bezieht sich auf eine Luftleiteinrichtung nach dem Oberbegriff des Anspruchs 1.

Aus der DE-41 02 559 A1 ist eine Flügelanordnung zur Verbesserung der Bodenhaftung eines Fahrzeuges bekannt. Der Flügel ist an der Oberseite des Fahrzeughecks quer zum Fahrzeug angeordnet und wird vom Fahrtwind derart angeströmt, daß eine Abtriebskraft erzeugt wird. Der Flügel ist mit einer nach außen gewölbten Fläche dem Heck entgegengerichtet. Des weiteren ist aus der US-PS 4 558 898 ein Flügel mit Seitenwangen bekannt, der mittels Stützen auf einer Heckhaube eines Kraftfahrzeuges abgestützt ist.

Aus dem Buch "La réussite Porsche", E.P.A. Verlag, Paris 1981, Seite 551 ist ein Fahrzeug Carrera RSR Turbo bekannt, das eine Luftleiteinrichtung gemäß dem Oberbegriff des Anspruchs 1 aufweist. Diese umfaßt einen Spoiler, Seitenwangen zur Halterung des Flügels und ein Lufteinlaßgitter in einem Haubendeckel. Der Flügel ist zwischen Seitenwangen angeordnet und verläuft in einem vertikalen Abstand etwa parallel zum Spoiler, wobei in den Seitenwangen jeweils eine Einströmöffnung vorgesehen ist.

Aufgabe der Erfindung ist es, eine verbesserte Luftleiteinrichtung für ein Kraftfahrzeug zu schaffen, die neben einer Abtriebswirkung eine optimale Luftzuführung zum Motor und eine einfache Montage gewährleistet.

Diese Aufgabe wird erfindungsgemäß durch die kennzeichnenden Merkmale des Anspruchs 1 gelöst. Weitere vorteilhafte Merkmale beinhaltet der abhängige Anspruch.

Die mit der Erfindung hauptsächlich erzielten Vorteile bestehen darin, daß die Luftleiteinrichtung montagemäßig in einem Haubendeckel lösbar integriert ist und sich eine vormontierbare Baueinheit von Haube und Luftleiteinrichtung ergibt. Die Luftleiteinrichtung wird durch einen quer zum Fahrzeug angeordneten Flügel sowie durch einen Spoiler gebildet, der mit Seitenwangen ein einstückiges Bauteil bildet und der in eine Öffnung des Haubendeckels eingesetzt und mit Schraubmittel festgesetzt wird. Gleichzeitig sind in den Grundkörper des Spoilers Lufteinlaßöffnungen in einem Einsatzgitter angeordnet.

Die Seitenwangen der Luftleiteinrichtung bilden Luftführungselemente und weisen jeweils Einströmöffnungen auf, die eine Zuführung von Stauluft zum Motor ermöglichen. Hierzu sind die Seitenwangen etwa mittig der Kotflügel und in einem seitlichen Abstand zu dem Fahrzeugaufbau oberhalb der Gürtellinie vorgesehen, so daß auch der seitlich am Fahrzeug vorbeiströmende Luftstrom von der Luftleiteinrichtung geführt wird.

Zwischen den Seitenwangen kann der Flügel eine Grundstellung und eine unter einem Winkel angestellte Stellung einnehmen, wodurch unterschiedliche Abtriebskräfte erzielbar sind, insbesondere ist eine Abtriebskraft auch bei einem langsam fahrenden Fahrzeug erzielt.

Damit durch die Luftleiteinrichtung, insbesondere durch den Flügel in Verbindung mit dem Spoiler eine optimale Luftführung mit entsprechend wirkender Windabtriebskraft auch bei geringen Geschwindigkeiten erzielt wird, ist der Flügel als Tragflächenprofil wie bei einem Flugzeug ausgeführt und ist - in Draufsicht gesehen - als Abschnitt eines Kreisringes ausgeführt. Des weiteren ist der Flügel - in Draufsicht gesehen - bogenförmig ausgebildet.

Die Seitenwangen - in der Seitenansicht gesehen - sind etwa keilförmig wie eine Pfeilspitze geformt und weisen mehrere Abschnitte auf, die insgesamt ein unregelmäßiges Fünfeck ergeben.

Die Einströmöffnungen in jeder Seitenwange sind dreieckförmig ausgeführt.

Ein Ausführungsbeispiel der Erfindung ist in der Zeichnung dargestellt und wird im nachfolgenden näher beschrieben.

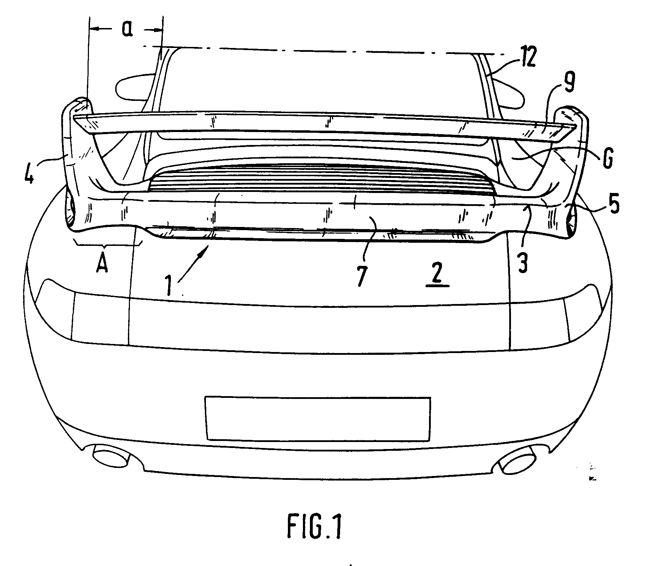

Es zeigen
- Fig. 1: eine Ansicht einer Luftleiteinrichtung von hinten,
- Fig. 2: eine Schrägansicht auf die Einrichtung,
- Fig. 3: eine Ansicht der Luftleiteinrichtung von oben,

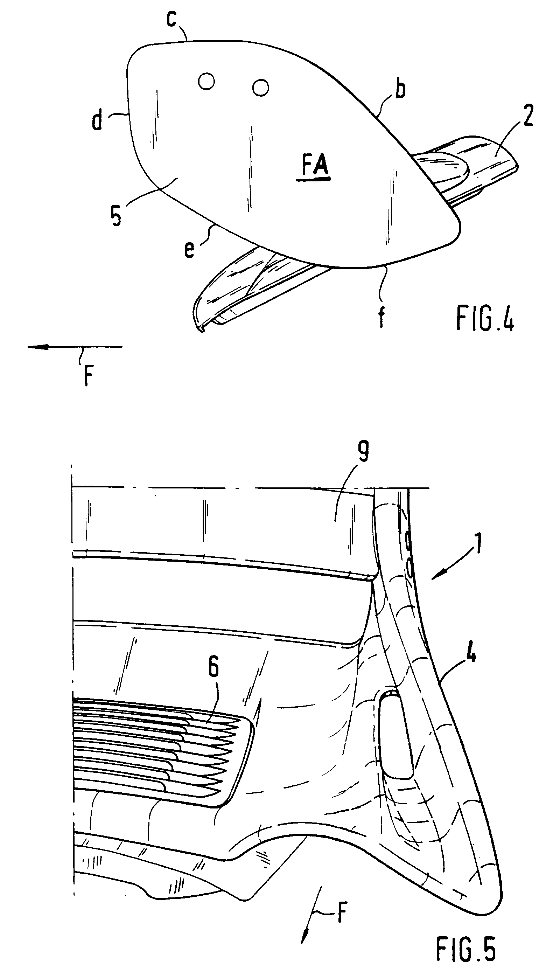

- Fig. 4: eine Seitenansicht auf eine Seitenwange der Luftleiteinrichtung,
- Fig. 5: eine Ansicht auf eine Lufteinlaßöffnung an der Seitenwange von oben,
- Fig. 6: einen Mittenschnitt durch die Luftleiteinrichtung mit Flügel, Spoiler und Lufteinlaßgitter,

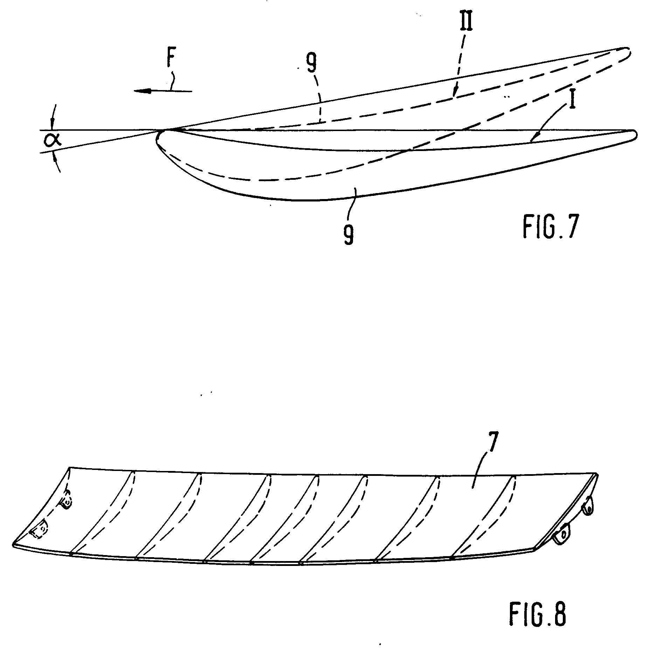

- Fig. 7: eine Seitenansicht des Flügels in einer Grundstellung und in einer angestellten Stellung, die in gestrichelten Linien gezeigt ist,
- Fig. 8: eine schaubildliche Darstellung des Flügels mit Tragflächenprofil und
- Fig. 9: eine Ausführung einer erfindungsgemäßen Luftleiteinrichtung.

Eine Luftleiteinrichtung 1 umfaßt im wesentlichen eine in einem Haubendeckel 2 eingesetzte Spoilereinheit 3 mit integrierten Seitenwangen 4, 5 und einem Lüftungsgitter 6. Die Spoilereinheit 3 besteht aus einem Spoiler 7 mit hochgezogener Endkante 8 und den angeformten Seitenwangen 4 und 5. Oberhalb des Spoilers 7 in einem vertikalen Abstand zu diesem ist zwischen den Seitenwangen 4, 5 ein Flügel 9 in Form eines Tragflächenprofils wie bei einem Flugzeug festgesetzt. Die Vorwärtsfahrtrichtung des Fahrzeugs ist mit F gekennzeichnet.

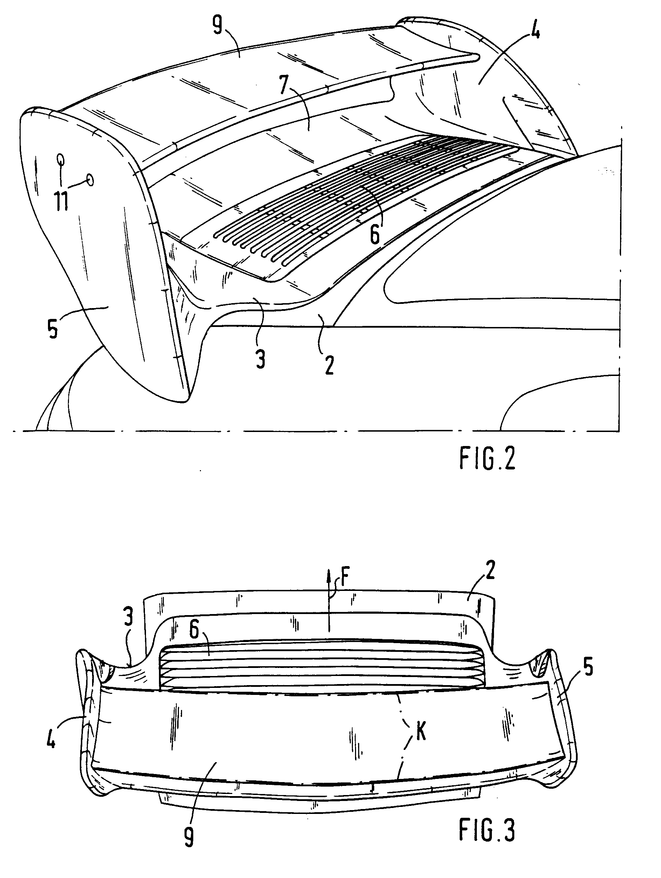

Der Flügel 9 ist mit seiner stark positiv gewölbten Fläche 20 dem Spoiler 7 zugerichtet und mittels Schrauben 11 an den Seitenwangen 4, 5 festgesetzt. Der Flügel 9 kann in mindestens zwei Positionen, in einer Grundstellung I und in einer angestellten Stellung II an den Seitenwangen 4, 5 festgesetzt werden. Die angestellte Stellung ist gegenüber der Grundstellung um einen Winkel von alpha = 10° geneigt. Der Flügel 9 - ist in Draufsicht gesehen - ein Abschnitt eines Kreisringes K, was strichpunktiert in Fig. 3 dargestellt ist. In einer Vorderansicht gesehen ist der Flügel 9 bogenförmig, mit einer leichten Wölbung nach oben ausgeführt. Der Flügel 9 verläuft in etwa parallel zum Spoiler 7. Dieser erstreckt sich etwa bis Mitte Kotflügel derart, daß zwischen den Seiten 12 des Fahrzeuges oberhalb der Gürtellinie GL und den Wangen 4, 5 ein Abstand a verbleibt. Oberhalb der Kotflügel weist der Spoiler 7 einen freiliegenden Abschnitt A auf.

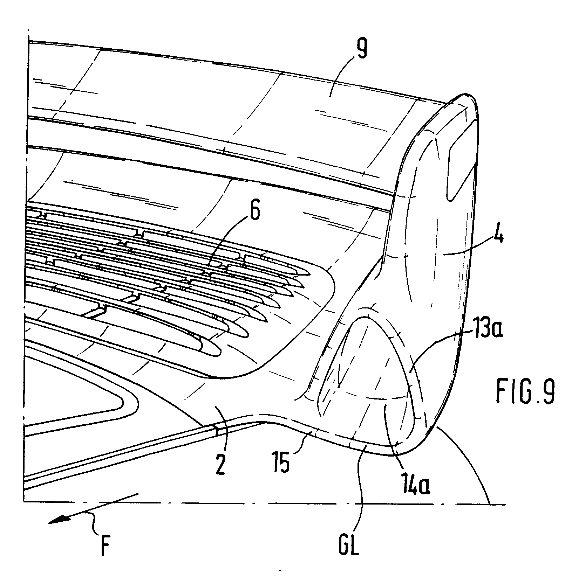

In den Seitenwangen 4, 5 ist jeweils ein Lufteinlaßkanal 13a mit einer Einströmöffnung 14a angeordnet. Gemäß der Ausführung nach Fig. 9 ist die Einströmöffnung 14a stirnseitig der Seitenwangen 4, 5 eingelassen und schließt etwa mit der Vorderkante 15 des Haubendeckels 2 ab.

Die Seitenwangen 4, 5 sind in einer Seitenansicht gesehen, etwa keilförmig mit mehreren Abschnitten b bis f ausgeführt, die insgesamt ein ungleichmäßiges fünfeckiges Element ergeben. Die Abschnitte c und f verlaufen etwa parallel zu einander. Der Abschnitt c ist zum Abschnitt d etwa rechtwinklig angeordnet.

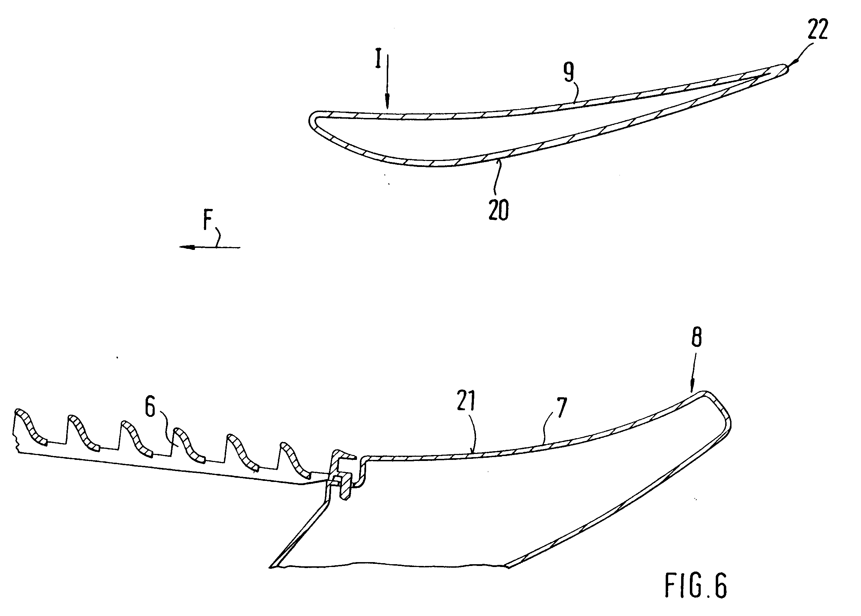

Wie in Fig. 6 näher dargestellt, entspricht die positive Fläche 20 des um 180° gedrehten Flügels 9 im Formverlauf etwa der negativen Fläche 21 des Spoilers 7, so daß die Flächen 21 und 22 etwa parallel zueinander stehen. Der Spoiler 7 weist eine negative Fläche 21 auf, die vor dem freien Ende 22 des Flügels 9 endet.

## Patentansprüche

1. Luftleiteinrichtung am Heck eines Kraftfahrzeuges mit einem Flügel (9) und einer Spoilereinheit (3), die einen Spoiler (7), Seitenwangen (4, 5) zur Halterung des Flügels (9) und ein Lufteinlaßgitter (6) in einem Haubendeckel (2) umfaßt, wobei der Flügel (9) zwischen den Seitenwangen (4, 5) angeordnet ist, in vertikalem Abstand etwa parallel zum Spoiler (7) verläuft und in den Seitenwangen jeweils eine Einströmöffnung (14a) integriert ist, **dadurch gekennzeichnet**, daß die entgegen der Vorwärtsfahrtrichtung (F) gerichtete und sich quer zum Fahrzeug erstreckenden Einströmöffnungen (14a) jeweils eine dreieckförmige Mündungsöffnung besitzen und etwa mit der Vorderkante (15) der Seitenwange (4, 5) beziehungsweise des Haubendeckels (2) abschließen.

2. Luftleiteinrichtung nach Anspruch 1, **dadurch gekennzeichnet**, daß sich der Spoiler (7) mittels eines freiliegenden Abschnittes (A) zu den Kotflügeln des Fahrzeuges erstreckt und daß die den Spoiler (7) endseitig abschließenden Seitenwangen (4, 5) mit den Einströmöffnungen (14a) jeweils im Abstand (a) zu den oberhalb einer Gürtellinie (G) des Fahrzeugaufbaues verlaufenden Seitenflächen (12) des Fahrzeugaufbaues angeordnet sind.

## Claims

1. An air-guide device on the tail of a motor vehicle with a wing (9) and a spoiler unit (3) comprising a spoiler (7), lateral webs (4, 5) for holding the wing (9) and an air-inlet grille (6) in a lid cover (2), the wing (9) being arranged between the lateral webs (4, 5) and extending at a vertical distance from and substantially parallel to the spoiler (7) and one respective inflow opening (14a) being integrated in the lateral webs, **characterized in that** the inflow openings (14a) directed contrary to the direction of forward travel (**F**) and extending transversely to the vehicle each have a triangular opening and terminate substantially at the front edge (15) of the lateral web (4, 5) or the lid cover (2) respectively.

2. An air-guide device according to Claim 1, **characterized in that** the spoiler (7) extends by means of a free portion (**A**) towards the wings of the vehicle, and the lateral webs (4, 5) closing the spoiler (7) at the ends are arranged with the inflow openings (14a) each at a respective distance (**a**) from the lateral faces (12) of the vehicle body which extend above a waist line (**G**) of the vehicle body.

## Revendications

1. Dispositif de guidage d'air à l'arrière d'un véhicule automobile doté d'un aileron (9) et d'un ensemble déporteur (3), comprenant un déporteur (7), des joues latérales (4, 5) destinées à la fixation de l'aileron (9) et une grille d'entrée d'air (6), dans un capot (2), l'aileron (9) étant disposé entre les joues latérales (4, 5), selon un espacement vertical, en s'étendant à peu près parallèlement par rapport au déporteur (7), et une ouverture d'entrée d'écoulement (14a) étant intégrée dans chacune des joues latérales, caractérisé en ce que les ouvertures d'entrée d'écoulement (14a), qui sont orientées dans le sens opposé au sens de roulage (F) et qui s'étendent dans la direction transversale par rapport au véhicule, comportent chacune une ouverture d'embouchure à forme triangulaire et se limitent à peu près au bord avant (15) de la joue latérale (4, 5), ou du capot (2).

2. Dispositif de guidage d'air selon la revendication 1, caractérisé en ce que le déporteur (7) s'étend, au moyen d'une section (A) exposée librement, en direction des ailes de carrosserie du véhicule, et en ce que les joues latérales (4, 5) délimitant, côté extrémité, le déporteur (7), avec les ouvertures d'entrée d'écoulement (14a), sont disposées chacune à distance (a) vis-à-vis des surfaces latérales (12) s'étendant au-dessus d'une ligne de ceinture (G) de la carrosserie de véhicule.
